# EUROPEAN PATENT APPLICATION

(11) **EP 1 826 656 A2**
(43) Date of publication of application: **29.08.2007**
(21) Application number: 07102475.6
(22) Date of filing: 15.02.2007
(51) Int. Cl.: G06F 3/023, G06F 3/048

(54) **Portable device and special character input method thereof**

(30) Priority: 28.02.2006 KR 20060019578
(71) Applicant: Samsung Electronics Co., Ltd., Suwon-si, Gyeonggi-Do (KR)
(72) Inventor: Hwang, Jae Joon, Seoul (KR); Lee, Dong Uk, Seoul (KR); Yi, Sun Young, Seoul (KR); Lee, Chang Hoon, Inchen-si (KR)
(74) Representative: Grünecker, Kinkeldey, Stockmair & Schwanhäusser Anwaltssozietät

(57) **Abstract**

A portable device and a special character input method for the portable device. The portable device includes a controller for controlling display of more than one special character groups simultaneously, each special character group having a plurality of special characters, and a display for displaying the special character groups simultaneously under control of the controller. The special character input method classifies the special characters into a plurality of special character groups, displays the special character groups simultaneously, and presents a special character group in an enlarged pop-up window, thereby improving legibility of the characters and simplifying key manipulation for inputting the special characters.

## Description

### BACKGROUND OF THE INVENTION

### Field of the Invention

The present invention generally relates to a portable device and, in particular, to a special character input method for a portable device that facilitates input manipulation of special characters.

### Description of the Related Art

Typically, special characters include symbols such as diagrams, marks, emblems, signs, parentheses, and the like (for example, +, !, ∟,∟ , ?, [, ]).

As the portable devices supporting message transmission services and text communications using short message service (SMS) increases, various special character input methods have been proposed.

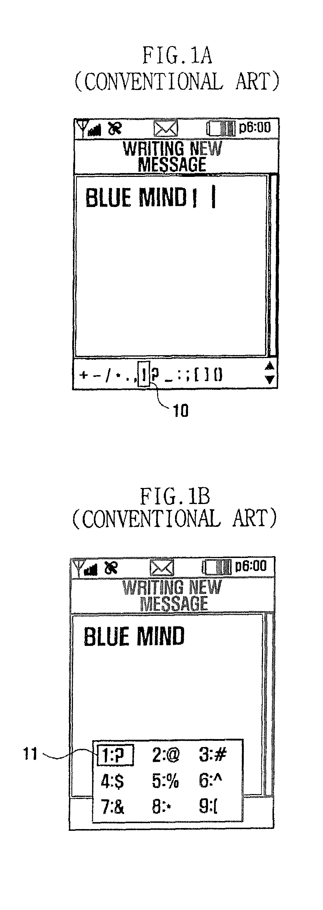

FIGS. 1A and 1B are views illustrating examples of screen display images related to a conventional special character input method.

Referring to FIG. 1A, a portable device displays a preset quantity of special characters in a special character display window while in a special character input mode so the user can select one of the special characters by manipulating direction keys provided on the keypad of the portable device. In this example, a special character "!" 10 is selected so the selected special character 10 is written after a phrase "blue mind" in a message writing window.

Referring to FIG. 1B, the portable device stores a preset quantity of the special characters that are linked to corresponding number keys per page. The selected special character is entered when a number key corresponding to one of the special characters is selected by the user. In this example, the special character "?" 11 linked to the number key of 1 is selected so the "?" is written after the phrase "blue mind" in the message writing window.

However, the conventional special character input method of FIG. 1A has a shortcoming in that multiple key strokes are required to select the target special character when the target special character is positioned at a location distant from the cursor.

The conventional special character input method of FIG. 1 B enables the user to select the target special key with one stroke of the key matched to the target special character. However, the latter conventional special character input method requires more complicated keypad manipulation to find the target special character by changing pages.

### SUMMARY OF THE INVENTION

The present invention has been made in an effort to solve the above problems, and it is an object of the present invention to provide a special character input method for a portable device which is capable of facilitating utilization of the special characters.

The above and other objects are accomplished by a portable device according to the present invention. The portable device according to one aspect of the present invention includes a controller for controlling display of more than one special character group simultaneously, each special character group having a plurality of special characters, and a display for displaying the special character groups simultaneously under control of the controller.

According to another aspect of the present invention, the above and other objects are accomplished by a special character input method for a portable device. The special character input method includes determining whether the portable device is in a text input mode, and displaying more than one special character group simultaneously, each special character group including a plurality of special characters, when the portable device is in the text input mode.

The special character input system of the present invention classifies the special characters into a plurality of special character groups, displays the special character groups simultaneously, and displays a special character group in an enlarged pop-up window, thereby improving legibility of the characters and simplifying key manipulation for inputting the special characters.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIGS. 1 A and 1B are views illustrating examples of screen display images related to a conventional special character input method;
FIG. 2 is a block diagram of a configuration of a portable device, implemented with a special character input method for a portable device according to the present invention;
FIG. 3 is a flowchart showing the special character input method for a portable device according to the present invention;
FIG. 4 is a view of an example of a special character mapping table of a special character input method according to the present invention;
FIGS. 5A and 5B are views of the special character mapping table stored in the mapping table storage unit of the portable device of FIG. 2; and
FIGS. 6A to 6C are views of examples of screen display images related to a special character input method for a portable device according to the present invention.

### DETAILED DESCRIPTION OF PREFERRED EMBODIMENTS

Preferred embodiments of the present invention are described with reference to the accompanying drawings in detail. The same reference numbers are used throughout the drawings to refer to the same or like parts. Detailed descriptions of well-known functions and structures incorporated herein are omitted to avoid obscuring the subject matter of the present invention.

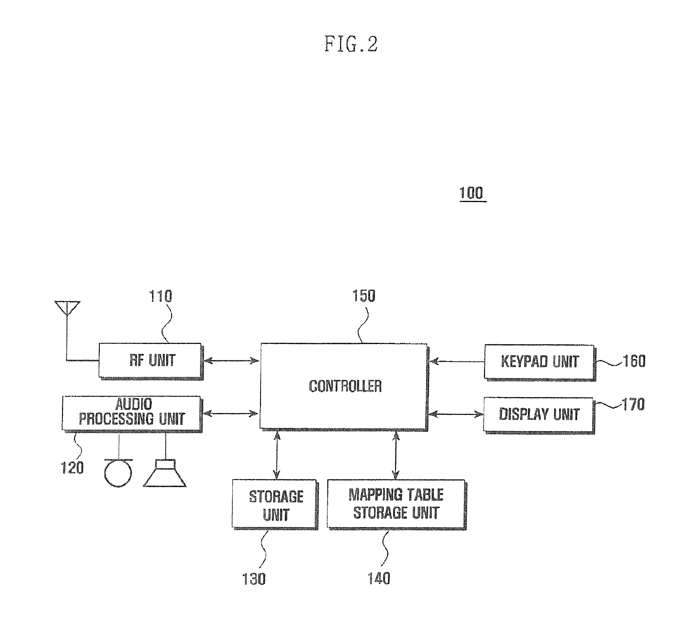

FIG. 2 shows a portable device 100 according to the present invention, where the portable device 100 includes a radio frequency (RF) unit 110, an audio processing unit 120, a storage unit 130, a mapping table storage unit 140, a controller 150, a keypad unit 160, and a display unit 170.

The RF unit 110 includes a high frequency part, an intermediate frequency part, and a low frequency part. The RF unit 110 transmits and receives radio signals carrying voice, text, multimedia, and control data.

The audio processing unit 120 converts analog signals input through a microphone into digital voice signals and converts digital voice signals received by the RF unit 110 into analog signals for output through a speaker. Preferably, the audio processing unit 120 is provided with codecs for converting the digital signals transferred from the RF unit 110 into analog signals or converting the analog signals input through the microphone into digital signals.

The storage unit 130 includes a program memory that stores programs for operating the portable device 100 and the operation related information, and a data memory that stores the data generated during the operations. The storage unit 130 also stores information on special characters.

The mapping table storage unit 140 stores a mapping table that maps special characters to corresponding special character numbers, group numbers, and page numbers. The special character numbers are unique identification numbers each linked to a corresponding special character, the group numbers are numbers that each identify a preset special character group, and the page numbers are numbers that each identify a preset page associated with a plurality of special character groups.

The controller 150 controls overall operations of the portable device 100. In particular, the controller 150 controls display of more than one special character group simultaneously when the portable device 100 operates in a special character input mode.

The controller 150 also enables selection of one of the special character groups and selection of one of the special characters in the selected special character group according to a user's key input manipulations. The special character group selection is carried out by manipulating direction keys, and the special character selection is performed by selection of a number key mapped to a target special character.

The keypad unit 160 includes a plurality of character keys, number keys, function keys, and volume control keys that generate and transmit a control signal when a key input is performed.

The display unit 170 may be a liquid crystal display (LCD) and displays information associated with operations of the portable device. The display unit 170 also displays information received through the RF unit 110. The display unit 170 can display more than one special character group simultaneously under control of the controller 150 when the portable device 100 operates in the special character input mode.

In addition, the display unit 170 can display special characters arranged in a special character group in an enlarged form under control of the controller 150.

When a special character is selected from a special character group, the selected character is displayed on one part of the display unit 170 and the special character groups are displayed in another part of the display unit 170.

The display unit 170 indicates the page number of the page selected in response to a page flip signal. The page flip signal is generated by volume keys.

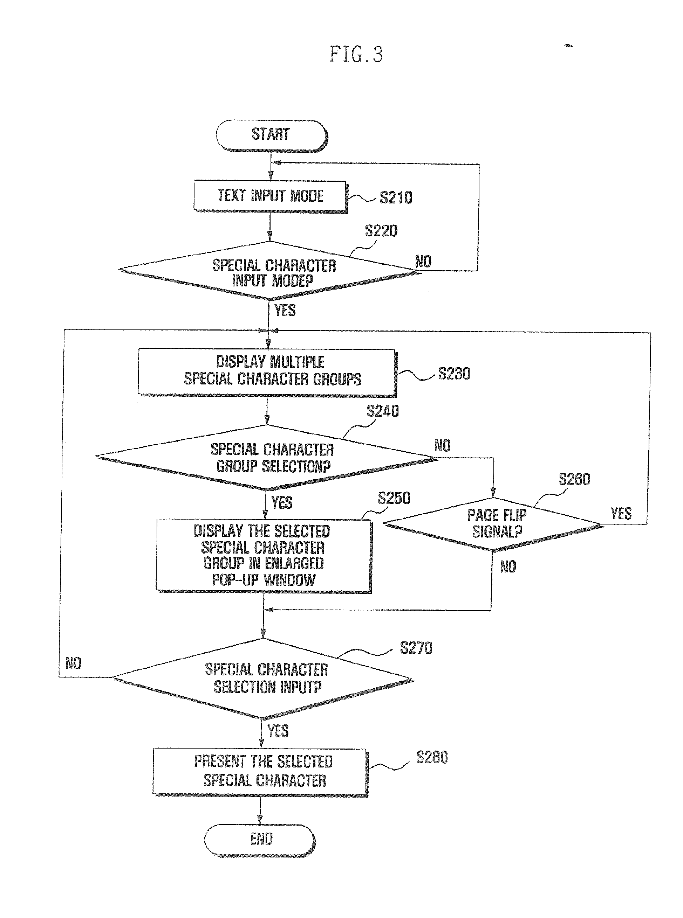

FIG. 3 is a flowchart illustrating the special character input method for a portable device according to the present invention.

When the portable device 100 is in the text input mode at step S210, the controller 150 determines whether a command is input to enter the special character input mode at step S220. When a command is input to enter the special character input mode, the controller 150 controls, with reference to the special key mapping table, display of more than one special character group on the display unit 170 simultaneously at step S230.

The special character mapping table matches special characters with keys in a hierarchal structure with special character numbers, special character group numbers, and special character page numbers. The special character numbers are unique identification numbers each linked to a corresponding special character, the group numbers are numbers that each identify a preset special character group, and the page numbers are numbers that each identify a preset page associated with a plurality of special character groups. Preferably, the special character groups are displayed at a separate window on the display unit 170.

While the special character groups are displayed, the controller 150 determines whether a key input to select one of the special character groups is performed at step S240. Preferably, special character group selection is performed with volume adjustment keys. When it is determined that a special character group selection command is input, the controller 150 displays the special keys of the selected special character group in enlarged forms at step S250.

If no key input is performed at step S240, the controller 150 determines whether a key input to flip a page to see another special character page is performed at step S260.

The controller 150 repeats the step S230 when it is determined that the key manipulation for flipping a page is performed. If no page flipping signal is input, the controller determines whether a key input signal generated by a key mapped to a special character is performed at step S270. Preferably, keys mapped to individual special characters are number keys.

When it is determined that a key input for selecting a special character is performed, the controller 150 displays the selected special character on the display unit at step S280. Preferably, the selected special character is displayed in a window different from the window for displaying the special character groups.

If no key input is performed at step S270, the controller 150 repeats step S230.

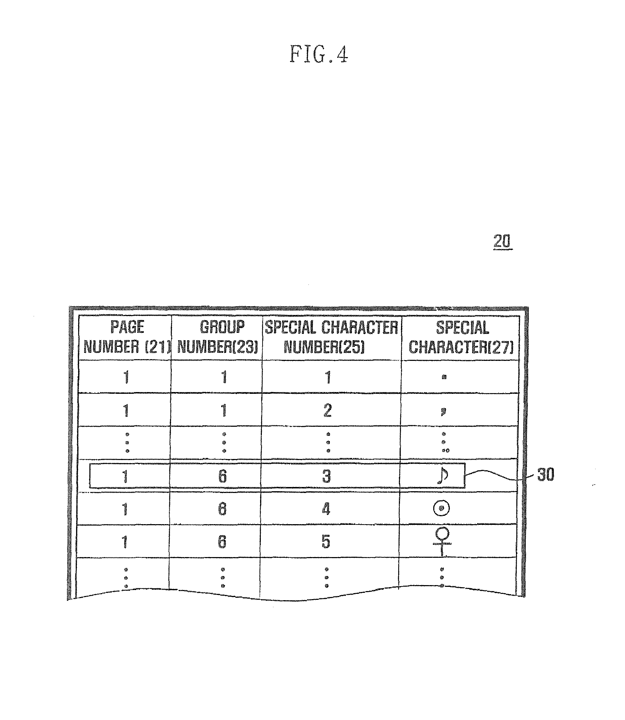

Referring to FIGs. 2 and 4, a special character mapping table 20 includes a page number column, a group number column, a special character number column, and a special character column.

For example, the special character mapping table 20 can include map information 30 on a special character in the form of a row describing that a special character ' 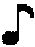 *'* is mapped to the special character number of 3 on group 6 of page 1.

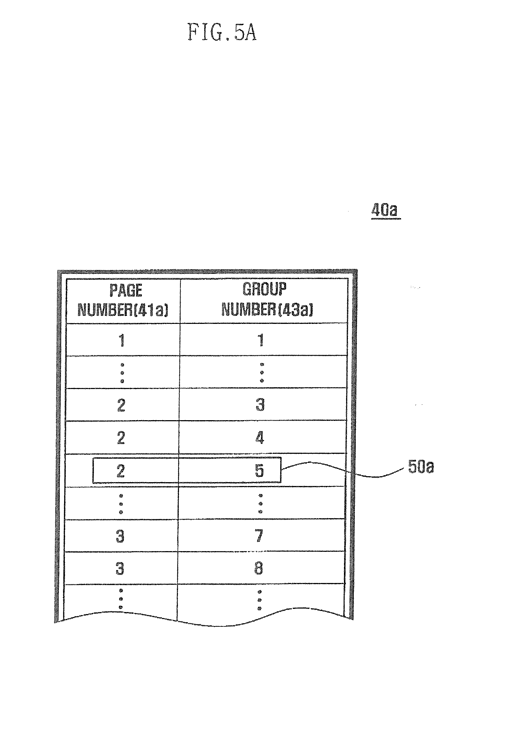

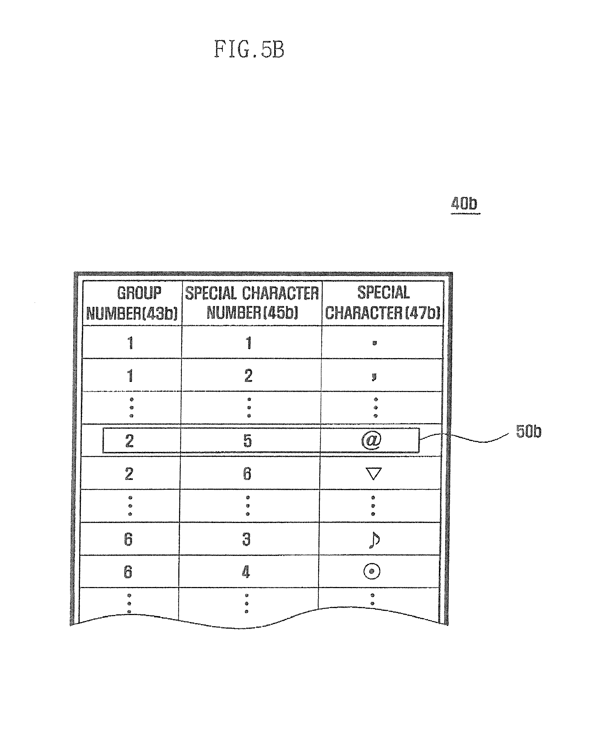

FIGs. 5A and 5B show examples of the special character mapping table stored in the mapping table storage unit of the portable device of FIG. 2. FIG. 5A shows a first table 40a that links page numbers listed in the page number column 41 a and group numbers listed in the group number column 43a, and FIG. 5B shows a second table 40b that links groups listed in the group number column 43b and special characters listed in the special character list column 45b to actual special characters listed in the special character column 47b.

The first table 40a includes a plurality of rows each containing mapping information having a page number and a group number. For example, mapping information 50a of the first table 40a includes values of "2" and "5" corresponding to the respective columns 41 a and 43a.

The second table 40b includes a plurality of rows each containing mapping information having a group number, a special character number, and an actual special character. For example, mapping information 50b of the second table 40b has values of 2 and 5 in the respective group number column 43b and the special character number column 45b, and a character @ in the special character column 47b.

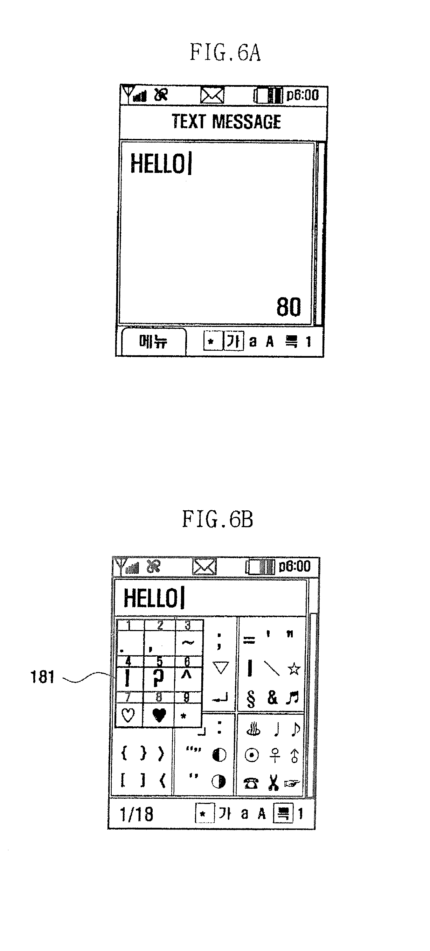

FIG. 6A shows a screen display image when the portable device is in the text input mode. In FIG. 6A, a text word 'Hello' is displayed on a display screen according to the user's key manipulation in the text input mode.

FIG. 6B shows a screen display image when the portable device is in the special character input mode. In FIG. 6b, the controller 150 controls the display, with reference to the mapping table, so the selected special character group 181 is displayed in an enlarged form when a special character group 181 is selected from a plurality of special character groups in the special character input mode. Here, group selection is performed with direction keys.

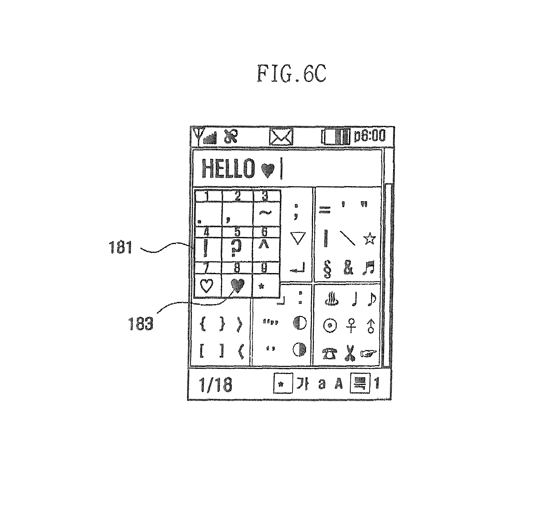

FIG. 6C shows a screen display image when a special character is selected to be displayed on the display unit. In FIG. 6c, if a selection signal is input while the selected special character group 181 is enlarged, the controller 150 presents the special character 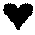 183 corresponding to the selection signal after the phrase 'Hello.'

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

As described above, the special character input method of the present invention classifies the special characters into a plurality of special character groups, displays the special character groups simultaneously, and presents a special character group in an enlarged pop-up window, thereby improving legibility of the characters and simplifying key manipulation for inputting the special characters.

## Claims

1. A portable device (100), comprising:
a controller (150) for controlling display of more than one special character group simultaneously, each special character group having a plurality of special characters; and
a display (170) for displaying the special character groups simultaneously under control of the controller.

2. The portable device of claim 1, further comprising a storage unit (140) for storing a mapping table that maps the special characters to special character numbers, maps the special character numbers to special character group numbers, and maps the special character group numbers to special character page numbers.

3. The portable device of claim 2, wherein the special character numbers are unique identification numbers each linked to a corresponding special character.

4. The portable device of claim 2, wherein the special character group numbers are unique identification numbers each linked to a corresponding special character group.

5. The portable device of claim 2, wherein the special character page numbers are unique identification numbers each linked to a corresponding special character page.

6. The portable device of claim 1, wherein the controller (150) enables selection of one of the special character groups and selection of one of the special characters included in the selected special character group, by key manipulation.

7. The portable device of claim 6, wherein the special character group is selected by manipulating direction keys.

8. The portable device of claim 6, wherein the selected special character group is displayed in an enlarged pop-up window.

9. The portable device of claim 6, wherein the special characters are linked to individual number keys of the portable device.

10. The portable device of claim 6, wherein the selected special character is displayed in a writing window.

11. The portable device of claim 1, wherein the display displays a page corresponding to a page identification number selected in response to a page flip signal input.

12. The portable device of claim 11, wherein the page flip signal is input by manipulation of volume keys.

13. The portable device of claim 1, wherein the special character groups are displayed in a special character group window.

14. A special character input method for a portable device, comprising:
determining (S210, S220) whether the portable device is in a text input mode; and
displaying (S230) more than one special character groups simultaneously, each special character group including a plurality of special characters, when the portable device is in a special character input mode.

15. The special character input method of claim 14, further comprising mapping the special characters to special character numbers, mapping the special character numbers to special character group numbers, and mapping the special character group numbers to character page numbers.

16. The special character input method of claim 15, wherein the special character numbers are unique identification numbers each linked to a corresponding special character.

17. The special character input method of claim 15, wherein the special character group numbers are unique identification numbers each linked to a corresponding special character group.

18. The special character input method of claim 15, wherein the special character page numbers are unique identification numbers each linked to a corresponding special character page.

19. The special character input method of claim 14, wherein displaying the special character groups includes:
selecting (S240) one of the special character groups;
selecting (S270) one of the special characters in the selected special character group; and
presenting (S280) the selected special character.

20. The special character input method of claim 19, wherein the special character group is selected by manipulation of direction keys provided to the portable device.

21. The special character input method of claim 19, wherein the special character group is displayed in an enlarged pop-up window.

22. The special character input method of claim 19, wherein the special characters are selected by manipulation of number keys, the number keys being linked to the individual special characters.

23. The special character input method of claim 19, wherein the selected special character is displayed in a writing window.

24. The special character input method of claim 14, wherein the displaying step comprises displaying a page corresponding to a page identification number selected in response to a page flip signal input.

25. The special character input method of claim 24, wherein the page flip signal is input by manipulation of volume keys.

26. The special character input method of claim 14, wherein the special character groups are displayed in a special character group window.
